(19) Europäisches Patentamt
European Patent Office
Office européen des brevets

(11) **EP 1 604 947 A1**

(12) **EUROPEAN PATENT APPLICATION**

(43) Date of publication:
**14.12.2005 Bulletin 2005/50**

(51) Int Cl.7: **C01B 3/10**, C01B 3/06,
C01C 1/02, C01B 21/072,
C01B 21/06, B01J 8/08

(21) Application number: **04013334.0**

(22) Date of filing: **07.06.2004**

(84) Designated Contracting States:
**AT BE BG CH CY CZ DE DK EE ES FI FR GB GR
HU IE IT LI LU MC NL PL PT RO SE SI SK TR**
Designated Extension States:
**AL HR LT LV MK**

(71) Applicant: **ETH Zürich
8092 Zürich (CH)**

(72) Inventors:
• **Wegner, Karsten
8008 Zurich (CH)**

• Ly, Hao C.
8052 Zurich (CH)
• Weiss, Rodrigo J.
8032 Zurich (CH)
• Pratsinis, Sotiris E.
8032 Zurich (CH)
• Steinfeld, Aldo
5200 Brugg (CH)

(54) **Process and apparatus for producing hydrogen or ammonia**

(57) A process for producing hydrogen or ammonia is disclosed. Steam (202) and a metal or a metal-containing compound (in the case of ammonia production, a metal nitride) are provided to a reaction zone (213) and reacted under conditions for obtaining gaseous hydrogen or ammonia, respectively. The metal or metal-containing compound is provided in the form of nanoparticles and/or nanodroplets with a BET surface area of at least 1.0 m²/g. The nanoparticles and/or nanodroplets may be produced *in-situ,* either by rapid cooling of a stream of a vapor (203) of the metal or metal-containing compound in a formation zone (212), or by feeding a stream of a precursor into the formation zone (212) and reacting the precursor with a reactant gas in the formation zone to obtain nanoparticles and/or nanodroplets. An apparatus (201) for carrying out the process is also disclosed.

Fig. 1

**Description**

**Field of the invention**

The present invention relates generally to a process and an apparatus for producing hydrogen and to a process and an apparatus for producing ammonia.

**Background of the invention**

It is known to produce hydrogen by reacting metals with steam. US 2,635,947 discloses a process in which metal particles are reacted in a fluidized bed with steam to generate hydrogen. However, the efficiency of such a method is limited by the available specific surface area, since the oxidation of the metal to the metal oxide occurs principally on the surface of the metal particles.

It has also been proposed to generate hydrogen by bubbling steam through a bath of molten zinc (Berman A., Epstein M., The Kinetics of Hydrogen Production in the Oxidation of Liquid Zinc with Water Vapor. *Int. J. Hydrogen Energy* 2000; **25**:957-67). However, the feeding of reactants and removal of products - especially the feeding of molten Zn and the removal of solid ZnO formed inside the Zn (liquid) bath - poses a technological difficulty for a continuous mode of operation. Furthermore, the reaction rate is inhibited by the formation of a ZnO (solid) layer around the steam bubbles. Further complications arise during startups and shutdowns because of the volume expansion and compression during zinc phase change.

A process circumventing some of these problems has been proposed in US 3,928,550. Metallic zinc is combined with molten lead. The mixture is then sprayed under pressure into an oxidizer. There, the zinc is reacted with steam to yield hydrogen and zinc oxide. Again, this method may suffer from reduced efficiency due to the low specific surface area of the lead/zinc droplets and from the formation of a ZnO (solid) layer on the surface of the droplets.

In US 4,496,370 a process has been proposed in which zinc vapor is directly reacted with steam to yield zinc oxide and hydrogen. Such a reaction, however, is heterogeneous in nature and generally requires the presence of some surface, and may lead to undesired deposits of solid zinc and zinc oxide on the reactor walls, as the walls provide such a surface.

Conventional production of ammonia employs the Haber-Bosch process. An alternative is a two-step process, in which first a metal nitride is produced, which then is reacted with water to form ammonia. For example, it is known from WO 02/090255 to produce ammonia by reacting aluminum nitride with water. This process may suffer from low efficiency and yield due to passivation of the aluminum nitride particles.

**Summary of the invention**

It is an object of the present invention to provide a process for producing hydrogen which avoids the above-mentioned problems and enables high yields. This object is achieved by a process with the features of claim 1.

It is a further object of the present invention to provide a process for producing ammonia which avoids the above-mentioned problems and enables high yields. This object is achieved by a process with the features of claim 9.

It is a further object of the present invention to provide an apparatus for the production of hydrogen or ammonia which is suitable for carrying out the process of the present invention. This object is achieved by an apparatus with the features of claim 12 or 16.

Both the processes for producing hydrogen and ammonia employ nanoparticles and/or nanodroplets comprising a metal or metal-containing compound, which are reacted with steam (i.e., water in the gas phase, water vapor). Specifically, for the production of ammonia, the metal-containing compound is a metal nitride. Nanoparticles and/or nanodroplets are advantageous because of their large specific surface area, which leads to an efficient reaction and high yields. The specific surface area of the nanoparticles and/or nanodroplets of the metal or metal-containing compound is significantly larger than for particles usually employed, e.g., in fluidized-bed reactors. Preferably, the nanoparticles and/or nanodroplets entirely consist of the metal or metal-containing compound, without admixtures or a carrier substance. However, the use of nanoparticles or nanodroplets comprising a carrier or admixtures is also within the scope of the present invention.

For the purposes of this document, "nanoparticles" are to be understood as solid particles having a BET surface area larger than 1 square,meter per gram ($m^2$/g). The term "nanoparticles" is thus defined by reference to a bulk property of a large collection (ensemble) of individual particles. Preferably, the BET surface area is larger than approximately 5 $m^2$/g. More preferably, it is larger than 10 $m^2$/g, and even more preferably larger than 20 $m^2$/g.

For the purposes of this document, the term "BET surface area" is to be understood as the specific surface area as determined by gas adsorption and as defined in ISO 9277 ("Determination of the specific surface area of solids by gas adsorption using the BET method"). More specifically, the BET surface area is the specific surface area as determined by nitrogen adsorption at 77 K employing the BET isotherm. For droplets (including nanodroplets), the BET surface area is to be understood as the BET surface area of the particles which are obtained after solidification of the droplets by rapid cooling without fusion of droplets. Thus, the term "nanodroplets" is to be understood as droplets of liquid whose solidification by rapid cooling without fusion yields nanoparticles in the sense of the above definition.

Assuming monodispersed spherical particles, the BET surface area, hereinafter referred to with the symbol SSA, is related to the average particle size d by the formula: $d[\mu m] = 6/(\rho[g/cm^3] \times SSA[m^2/g])$. Here, $\rho$ is the density of the solid material. Hence, the definition of nanoparticles and nanodroplets by their BET surface area can directly be translated into a definition by average particle size, provided the density of the material is known.

For producing hydrogen, the metal or metal-containing compound is preferably selected from the group consisting of Zn (zinc), Fe (iron), Mg (magnesium), Al (aluminum), Ti (titanium), Si (silicon), and Ca (calcium). For the purposes of this document, the semi-metal silicon (Si) is to be understood as a metal. Preferred is Zn, Fe or Mg, most preferred is Zn. For producing ammonia, the metal nitride is preferably selected from the group consisting of aluminum nitride (AlN), silicon nitride ($Si_3N_4$), iron nitride ($Fe_2N$), and titanium nitride (TiN). Preferred is aluminum nitride (AlN).

The nanoparticles and/or nanodroplets may be provided in an immobilized form or in form of an aerosol. The aerosol form is preferred.

The steam may be provided to the reaction zone by generating steam remote from the reaction zone and injecting steam into the reaction zone or its vicinity, or by feeding liquid water into the reaction zone or its vicinity. The liquid water is then evaporated within the reaction zone or its vicinity to form steam because of the elevated temperatures generally present in the reaction zone and its vicinity. Of course, a combination of *ex-situ* and *in-situ* generation of steam is also possible.

Preferably, the nanoparticles and/or nanodroplets and the steam are continuously fed into the reaction zone as streams, and any products of the reaction as well as any unreacted reactants are continuously removed from the reaction zone as a stream. In this way, a continuous process can be accomplished.

An advantage of the proposed processes for either hydrogen or ammonia production is that they can be carried out at moderate pressures. Advantageously, the process is carried out at a pressure below 10 bar, preferably below 2 bar, most preferred at ambient pressure or at less than 100 mbar above ambient pressure.

A very simple and highly efficient process results by generating the nanoparticles and/or nanodroplets *in situ*, i.e. in the reaction zone or in the vicinity of the reaction zone. Thus, the nanoparticles and/or nanodroplets may be generated in a formation zone upstream from or overlapping with said reaction zone by feeding a stream of a vapor of the metal or metal-containing compound into the formation zone, and cooling the vapor of the metal or metal-containing compound in the formation zone under conditions adapted for obtaining nanoparticles and/or nanodroplets.

In this case, it may be advantageous to feed additional steam to the formation zone which is cooler than the vapor of the metal or metal-containing compound when being fed to the formation zone, in order to aid in rapid cooling ("quenching") of the vapor of the metal or metal-containing compound. It may be particularly advantageous to feed liquid water into the formation zone or into its vicinity. The water will then be evaporated in the formation zone or its vicinity to form steam. The heat of evaporation required for this will additionally aid in the cooling of the vapor of the metal or metal-containing compound.

Preferably, the stream of the vapor of the metal or metal-containing compound, before feeding the vapor into the formation zone, is at a temperature and pressure such that the temperature is above the saturation temperature of the vapor. In addition, it is preferred that, in the formation zone, the vapor is cooled to a temperature below the saturation temperature. Preferably, the cooling rate exceeds approximately 5000 K/s.

Alternatively, the nanoparticles and/or nanodroplets may be generated in a formation zone upstream from or overlapping with said reaction zone by feeding a stream of a precursor of the metal or metal-containing compound into the formation zone, feeding a stream of a reactant gas suitable for reacting with the precursor to yield the metal or metal-containing compound into the formation zone, and reacting the precursor and the reactant gas under conditions suitable to yield nanoparticles and/or nanodroplets comprising the metal or metal-containing compound. The precursor may itself be a metal or a metal-containing compound, preferably it is a metal. Advantageously, the precursor is provided as a vapor. The term "reactant gas" is to be understood as a gas or gas mixture suitable to react with the precursor. Specifically, the reactant gas may be a nitriding gas. The term "nitriding gas" is to be understood as a gas or a gas mixture containing nitrogen and/or a nitrogen-containing compound suitable to react with the precursor to yield a metal nitride. Preferably, the nitriding gas comprises nitrogen ($N_2$).

Specifically, in the case of ammonia production, the precursor may be a metal, e.g., aluminum, preferably in the vapor state. Alternatively, the precursor may be a metal oxide, e.g. aluminum oxide ($Al_2O_3$), and the nitriding gas may additionally comprise a reducing agent, e.g. carbon, methane, other hydrocarbons or biomass. The conditions in the formation zone are then chosen such that a reaction of the metal oxide with the nitriding gas mixture occurs, which yields the metal nitride. The metal oxide may be provided in the form of nanoparticles or nanodroplets, or nanoparticles and/or nanodroplets of the metal nitride may be formed *in situ.*

The stream of the vapor of the metal, metal-containing substance or precursor may comprise a carrier gas.

Likewise, any stream of steam or of a reactant gas may comprise a carrier gas. Advantageously, the carrier gas is substantially inert under the conditions of the process. The carrier gas may be a noble gas, specifically, argon.

Generally, the reaction of the steam with the metal or metal-containing compound is exothermic. Thermal energy released by this reaction may advantageously be employed for heating any of the streams fed to the formation or reaction zone (i.e., for heating any of the streams of steam, of the vapor of the metal, metal-containing compound or precursor, or of any other reactant gas, with or without carrier gases). Any thermal energy supplied to the process, e.g. for heating of the streams, may advantageously be provided by concentrated solar energy, nuclear process heat or by combustion of a portion of the hydrogen generated.

An inventive apparatus comprises a reaction chamber with at least one first inlet for nanoparticles and/or nanodroplets comprising a metal or of a metal-containing compound or for a metal vapor, at least one second inlet for steam or liquid water, and at least one outlet for products of the reaction. It further comprises a mixing zone adapted for mixing the streams entering through the first and second inlets, and a reaction zone downstream from and/or overlapping with the mixing zone adapted for reacting nanoparticles and/or nanodroplets with steam.

If nanoparticles are generated *in situ* in the reaction chamber, the reaction chamber further comprises a particle/droplet formation zone downstream from and/or overlapping with the mixing zone and upstream from and/or overlapping with the reaction zone. The particle/droplet formation zone is adapted for forming nanoparticles and/or nanodroplets from the metal vapor by rapid cooling.

Preferably, the reaction chamber is elongated and has a plurality of inlets for said steam or liquid water and/or a plurality of inlets for said vapor of said metal or metal-containing compound distributed along a direction of elongation of the reaction chamber.

Alternatively, an inventive apparatus may comprise a reaction chamber with at least one first inlet for a precursor, at least one second inlet for a reactant gas (which can be a nitriding gas), at least one third inlet for steam or liquid water, and at least one outlet for products of the reaction. The reaction chamber further comprises a mixing zone adapted for mixing streams entering through at least said first inlet and said second inlet, a particle/droplet formation zone downstream from and/or overlapping with said mixing zone, adapted for forming nanoparticles and/or nanodroplets from said precursor and said reactant gas or said nitriding gas, and a reaction zone downstream from and/or overlapping with said mixing zone adapted for reacting nanoparticles and/or nanodroplets with steam.

Preferably, at least a portion of the reaction chamber has porous walls and means for feeding at least a portion of the steam or liquid water and/or at least a portion of the vapor of the metal, metal-containing compound or precursor to said reaction chamber through the porous walls. By this, deposits of the metal, the metal-containing compound, or of any reaction products on the walls of the reaction chamber can be reduced or completely avoided.

**Brief description of the drawings**

The invention will be described in more detail in connection with exemplary embodiments illustrated in the drawings, in which

Fig. 1     shows a schematic representation of a solar two-step cycle for producing hydrogen;
Fig. 2     shows a highly schematic representation of a reactor for producing hydrogen according to the present invention;
Fig. 3     shows a highly schematic representation of a reactor for producing ammonia according to the present invention;
Fig. 4     shows a schematic representation of a laboratory-scale apparatus for producing hydrogen or ammonia according to the present invention;
Fig. 5     shows a schematic detail view of part of the apparatus of Fig. 4;
Fig. 6     shows a schematic detail view of part of the apparatus of Fig. 4 according to a first embodiment;
Fig. 7     shows a schematic detail view of the apparatus of Fig. 4 according to a second embodiment; and
Fig. 8     shows a highly schematic view of a laboratory-scale apparatus for producing nanoparticles.

**Detailed description of the invention**

Anthropogenic emissions of greenhouse gases and other pollutants can be significantly reduced or even completely eliminated by substituting fossil fuels by cleaner fuels, e.g. hydrogen. A review of the process technology for thermo-chemically producing hydrogen from water using solar energy is found in (Steinfeld A., Palumbo R., Solar Thermochemical Process Technology. In: Meyers RA, editor. Encyclopedia of Physical Science and Technology, $3^{rd}$ edition, Volume 15. San Diego, USA: Academic Press, 2002. p. 237-256).

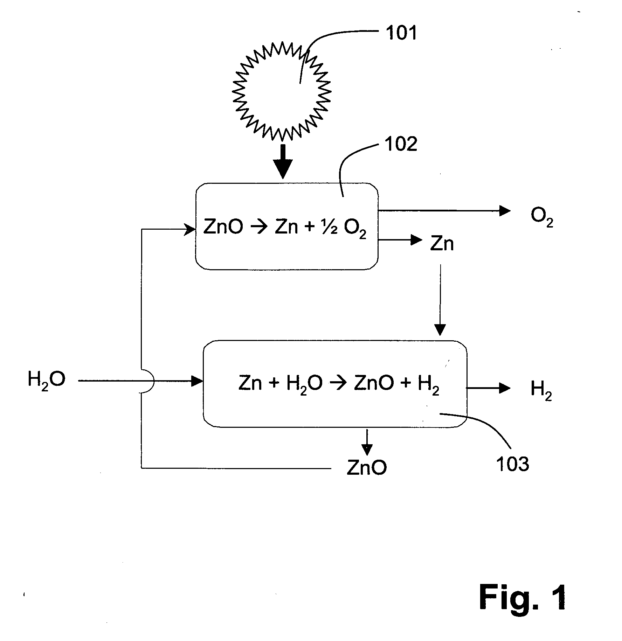

Fig. 1 shows a schematic representation of an example for a two-step thermochemical cycle for splitting water ($H_2O$) into hydrogen ($H_2$) and oxygen ($O_2$). For an overview over such two-step water-splitting cycles, based on metal oxide redox reactions, see e.g. (Steinfeld A., Kuhn P., Reller A., Palumbo R., Murray J., Tamaura Y., Solar-processed Metals as Clean Energy Carriers and Water-Splitters. *Int. J. Hydrogen Energy* 1998; 23:767-74, and literature cited therein).

A first, endothermic step 102 comprises thermal reduction of metal oxide to the metal or the lower-valence metal oxide by providing solar energy 101. The second, exothermic step 103 comprises the hydrolysis of the metal to form hydrogen and the original metal oxide; the latter is recycled to the first step. This solar thermochemical cycle is represented by:

$$1^{st} \text{ step (solar): } M_xO_y \rightarrow xM + 0.5yO_2$$

$$2^{nd} \text{ step (non-solar): } xM + yH_2O \rightarrow M_xO_y + yH_2$$

where M and $M_xO_y$ denote the metal and the corresponding metal oxide. The net reaction is $H_2O \rightarrow H_2 + 0.5\ O_2$. Hydrogen and oxygen are formed in different steps, thereby eliminating the need for high-temperature gas separation.

In Fig. 1, the metal oxide is zinc oxide (ZnO), which is reduced to elemental zinc (Zn) in the first solar step 102. The second, non-solar, exothermic step 103 is the hydrolysis of zinc at moderate temperatures to form hydrogen and zinc oxide. For the present example, the solar thermochemical cycle based on ZnO/Zn redox reactions is represented by:

$$1^{st} \text{ step (solar): } ZnO \rightarrow Zn + 0.5O_2$$

$$2^{nd} \text{ step (non-solar): } Zn + H_2O \rightarrow ZnO + H_2.$$

The chemical aspects of the 1$^{st}$ step and the present status of the pertinent chemical reactor technology are summarized in (Steinfeld A., Solar Hydrogen Production via a 2-step Water-Splitting Thermochemical Cycle based on Zn/ZnO Redox Reactions, *Int. J. Hydrogen Energy* 2002; **27**:611-19).

Other metals may also be employed in this redox (reduction-oxidation) cycle, such as Fe, Mg, Al, Ti, Si, and Ca. The temperature requirement for the production of metals from the metal oxides may be reduced by conducting the chemical reduction electrolytically, or by making use of a reducing agent such as carbon or methane (see e.g. Steinfeld A., Kuhn P., Reller A., Palumbo R., Murray J., Tamaura Y., Solar-processed Metals as Clean Energy Carriers and Water-Splitters. *Int. J. Hydrogen Energy* 1998; **23**:767-74). Mixed metal oxides may be also employed in this redox cycle. The process may also be applied by reducing a metal oxide to a lower-valence metal oxide, instead of performing the complete reduction to the metal. For example, in the first step, $Fe_2O_3$ or $Fe_3O_4$ may be reduced to wustite (FeO), which has the capability of splitting water in the second step.

Ammonia can also be produced via a 2-step process. The first, high-temperature, endothermic step is the production of metallic nitrides by, e.g. carbothermic reduction of their metal oxides in a $N_2$ atmosphere. The second step is the hydrolysis of the metal nitride for the formation of ammonia and the original metal oxide; the latter is recycled to the first step. The reactions can be represented by the following general equations:

$$1^{st} \text{ step (reduction): } M_xO_y + C(gr) + N_2 \rightarrow M_{x'}N_{y'} + CO$$

$$2^{nd} \text{ step (hydrolysis): } M_{x'}N_{y'} + H_2O \rightarrow M_xO_y + NH_3$$

where M denotes the metal, and $M_{x'}N_{y'}$ and $M_xO_y$ the corresponding metal nitride and oxide, respectively. The stoichiometry of theses reactions will depend on the metal. For example, for aluminum:

$$1^{st} \text{ step (reduction): } Al_2O_3 + 3C(gr) + N_2 \rightarrow 2AlN + 3CO$$

$$2^{nd} \text{ step (hydrolysis): } 2AlN + 3H_2O \rightarrow Al_2O_3 + 2NH_3$$

The net reaction is: $3C(gr) + N_2 + 3H_2O \rightarrow 3CO + 2NH_3$

Other metals may also be employed in this 2-step process, e.g. Si, Fe, Ti, etc. Other reducing agents than C (gr) (graphite) may also be employed for the reduction step, e.g. methane, biomass, and other hydrocarbons.

Alternatively, ammonia can be produced via a 3-step process. The first step is the endothermic reduction of the metal oxide to the metal. The second step is the nitridation of the metal with a nitriding gas producing metal nitride. The third step is the hydrolysis of the metal nitride for the formation of ammonia and the original metal oxide.

In the present invention, it is suggested to employ nanoparticles and/or nanodroplets in a process for producing hydrogen or in a process for producing ammonia. Metal nanoparticles can be obtained advantageously by evaporation-condensation processes. In these processes, the metal is first evaporated from a melt. Metal nanoparticle formation then takes place by vapor condensation due to oversaturation during rapid cooling (quenching). The quenching can be achieved, e.g., by mixing of the metal vapor with a gas of lower temperature or by expansion (cf. Kodas T.T., Hampden-Smith M., Aerosol Processing of Materials, Wiley-VCH, New York, 1999; Wegner K., Walker B., Tsantilis S., Pratsinis S.E., Design of Metal Nanoparticle Synthesis by Vapor Flow Condensation. *Chem. Eng. Sci.* 2002; **57**: 1753-62). An inert gas is employed frequently to carry the metal vapor from an evaporation zone to a particle formation zone and the product particles to a collector. This process also has been employed successfully for the production of zinc nanoparticles (Daub O., Langel W., Reiner C., Kienle L., QMS-controlled Production of Nanocrystalline Metals by Inert Gas Condensation in a Flow System. *Ber. Bunsenges. Phys. Chem.* 1997; **101**:1753-56).

The evaporation-condensation process can be coupled with a chemical reaction by introduction of a reactant gas to produce metal oxides, metal nitrides, metal carbides, or other ceramic materials (see, e.g., Pratsinis S.E., Wang G., Panda S., Guiton T., Weimer A., Aerosol Synthesis of AIN by Nitridation of Aluminum Vapor and Clusters. *J. Mater. Res.* 1995; **10**: 512-20). Generally speaking, nanoparticles of a metal or metal-containing compound can be produced in aerosol flow reactors by evaporation-condensation processes involving chemical reactions. In these processes, a precursor is evaporated, and the vapor of the precursor is mixed with a reactant gas. Subsequently, particle formation and reaction from the precursor to the metal or metal-containing compound take place by vapor condensation during rapid cooling (quenching). In US Patent No. 5,525,320, such a process (with aluminum as precursor and nitrogen or ammonia as reactant gas) has been employed successfully for the production of aluminum nitride nanoparticles.

An overview of the general process technology is given in (Kodas T.T., Hampden-Smith M., Aerosol Processing of Materials, Wiley-VCH, New York, 1999), and reference is made to this document for details of such processes.

Advantageously, the process for producing the nanoparticles/nanodroplets and the process for producing hydrogen employing these nanoparticles/nanodroplets are combined into a single process. A combined process for producing hydrogen then may comprise the following stages: Continuous production of steam and metal vapor in separate generators; continuous feeding of separate streams of steam and metal vapor into a mixing zone; mixing of steam and metal vapor inside the mixing zone to create a single stream of metal and steam; rapid cooling (quenching) of metal vapor by steam and simultaneous formation of nanoparticles and/or nanodroplets of metal; progression of the flow of steam laden with nanoparticles and/or nanodroplets of metal to a chemical reaction zone; chemical reaction of steam and metal, generating hydrogen and metal oxide particles along the chemical reaction zone; and continuous exit of products.

Not all of the above-mentioned stages need to be carried out as described; stages can overlap and/or can be skipped. Top candidate metals for the hydrogen-production process are zinc, iron, and magnesium, but other metals can also be employed. The process may also be applied using a metal-containing compound instead of the metal, and a hydrogen-containing substance instead of water. In addition, the particles and/or droplets can form an aerosol or can be immobilized at a surface. In any of these possibilities, a key aspect is the combined formation of nanoparticles and/or nanodroplets with a BET-surface area above 1 $m^2/g$, and their in-situ reaction to generate hydrogen. Alternatively, the nanoparticles and /or nanodroplets may be produced in separate upstream processes and fed as solids or liquids into the mixing zone.

Advantages of the proposed process for the production of hydrogen are at least three-fold:

- Simple, controllable, and continuous feeding of reactants and removal of products during continuous mode of operation.
- Enhanced interface reaction kinetics and mass transfer by the high specific surface area of nanoparticles and/or nanodroplets comprising a metal or metal-containing compound.
- Elimination of the complication associated with the phase change of metals in a bath.

Likewise, a combined process for the production of nanoparticles/nanodroplets of metal nitride and ammonia may comprise the following stages: Continuous production of steam, metal vapor, and a nitriding gas; Continuous feeding of separate streams of metal vapor and a nitriding gas into a mixing zone; Mixing of the metal vapor and the nitriding gas inside the mixing zone to create a single gas stream; Quenching of the vapor and simultaneous formation of nanoparticles and/or nanodroplets of metal nitride; Progression of the flow of nanoparticles and/or nanodroplets of metal nitride to a chemical reaction zone; Continuous feeding of steam into the chemical reaction zone; Chemical reaction of steam and metal nitride, generating ammonia and metal oxide particles along the chemical reaction zone; Continuous exit of products.

Again, not all of the above-mentioned stages must be carried out as described; stages can overlap and/or can be skipped.

Specifically, metal nanoparticles may be produced in a separate upstream process, then contacted with a nitriding gas to form nanoparticles comprising the metal nitride, and these nanoparticles may then be fed into the mixing zone.

Alternatively, the metal vapor, the nitriding gas and the steam may first be mixed to form nanoparticles comprising metal nitride and steam, which then react in the chemical reaction zone downstream of the mixing zone to form metal oxide particles and ammonia. Top candidate metals for the ammonia-production process are aluminum, titanium, and silicon, but other metals can also be employed.

Advantages of the proposed process for the production of ammonia are:

- Simple, controllable, and continuous feeding of reactants and removal of products during continuous mode of operation.
- Enhanced interface reaction kinetics and mass transfer by the high specific surface area of metal nitride nanoparticles and/or nanodroplets.
- Elimination of the complication associated with high pressure in conventional ammonia production, minimizing costs and safety concerns in the building and during operation of the plant.
- Elimination of the complication associated with the use of catalysts in the conventional ammonia production.
- Elimination of the need for syngas or hydrogen as the raw materials in the conventional ammonia production.
- Utilization of widely available raw materials (C, $N_2$, and water) via the 2-step process.

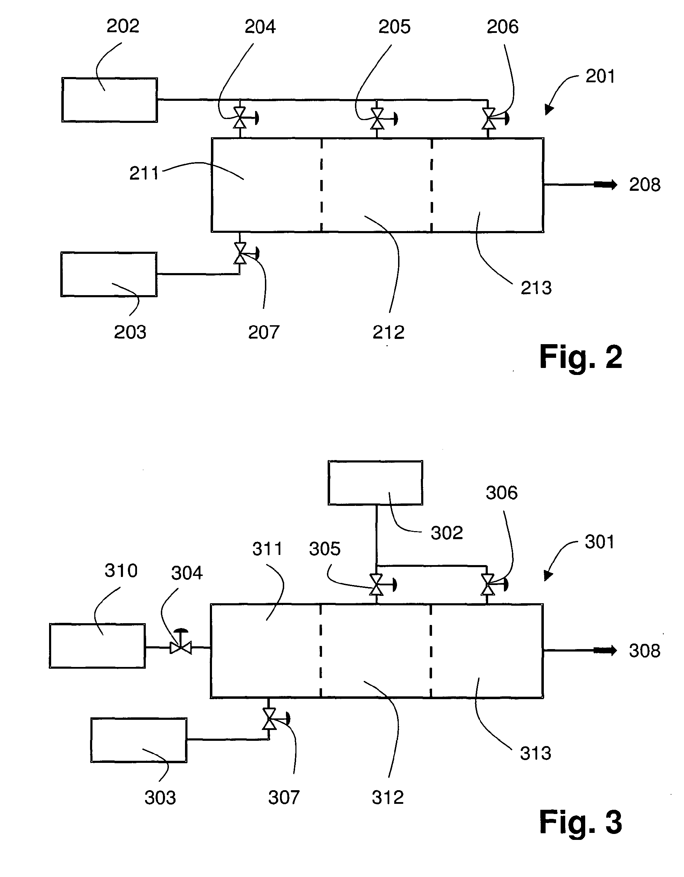

Fig. 2 shows a highly schematic view of an apparatus for producing hydrogen according to the present invention. The apparatus comprises an elongated reaction chamber 201 with one inlet for metal vapor and three inlets for steam. The metal vapor is provided in a metal vapor reservoir 203 and fed into the reaction chamber through a valve 207. The steam is provided in a steam reservoir 202 and fed into the reaction chamber through valves 204, 205 and 206. The valves are distributed along the direction of elongation of the reaction chamber. The reaction chamber may be thought to be divided into three (imaginary) zones: a mixing zone 211, a particle/droplet formation zone 212, and a reaction zone 213. The borders of the zones are indicated by dashed vertical lines in Fig. 2. It should be emphasized that these borders may be only imaginary, i.e., there need not be any physical borders, and the borders may be gradual, i.e. they need not be well-defined.

For producing hydrogen, metal vapor and steam are fed into the mixing zone 211. There, intimate mixing between the metal vapor and the steam occurs. The temperature, mixing ratio and total pressure in the mixing zone are chosen such that the temperature is above the saturation temperature of the metal vapor at the partial pressure of the metal vapor in the mixing zone. The mixture of metal vapor and steam is then transferred to the particle/droplet formation zone 212. In this zone, the mixture is subjected to rapid cooling (quenching) to a temperature below the saturation temperature of the metal vapor. By this, nanoparticles and/or nanodroplets of the metal are formed. The exact conditions under which such nanoparticle and/or nanodroplets formation occurs may depend on the type of metal, on the reactor design, size etc. (cf. Kodas T.T., Hampden-Smith M., Aerosol Processing of Materials, Wiley-VCH, New York, 1999; Wegner K., Walker B., Tsantilis S., Pratsinis S.E., Design of Metal Nanoparticle Synthesis by Vapor Flow Condensation. *Chem. Eng. Sci.* 2002; **57**:1753-62). Examples for suitable conditions for a specific reactor design will be given below. Generally, a cooling rate exceeding 5000 Kelvin per second (K/s or, equivalently, °C/s) is advantageously chosen. A higher cooling rate may be advantageous, as it may lead to smaller particle sizes. Therefore, more rapid cooling, e.g. at a rate exceeding 10000 K/s, is preferred, more preferred at a rate above 20000 K/s, even more preferred above 50000 K/s.

Additional steam may be fed to the particle/droplet formation zone 212 through valve 205. The steam may be at a lower temperature than at valve 204 in order to aid in rapid cooling of the metal vapor/steam mixture entering from the mixing zone.

The nanoparticles and/or nanodroplets generated in the particle/droplet formation zone 212 are then transferred to the reaction zone 213. Here, conditions are chosen such that a reaction of the metal nanoparticles/nanodroplets with the steam can occur. Generally, pressure and temperature conditions are such that the temperature is below the saturation temperature of the metal vapor, such that no evaporation from the nanoparticles and/or nanodroplets can occur. At the same time, the temperature should be high enough that the reaction proceeds rapidly enough. Additional steam can be fed to the reaction zone 213 through valve 206 for providing enough steam for a stoichiometric reaction and/or for regulating the temperature and pressure conditions in the reaction zone.

Finally, the reaction products (metal oxide-comprising particles and gaseous, elemental hydrogen) as well as any unreacted reactants (steam and/or metal nanoparticles/nanodroplets) are removed to form a product stream 208.

Specifically, if the metal is zinc (Zn) and the process is carried out at or near atmospheric pressure, the preferred conditions are as follows: The temperature in the mixing zone 211 should preferably exceed the saturation temperature of the zinc vapor. The saturation temperature depends on the partial pressure of Zn, which in turn depends on how much steam and Zn vapor is fed into the mixing zone. If the partial pressure approaches atmospheric pressure, the saturation temperature approaches 1180 K, and the temperature in the mixing zone should preferably exceed 1180 K. The temperature in the particle/droplet formation zone and in the reaction zone should preferably be in the range between 800 K and 1180 K, when working at atmospheric pressure. In general, for any operating pressure, the temperature in the particle/droplet formation zone and in the reaction zone should be below the saturation temperature of zinc vapor. The cooling rate in the particle/droplet formation zone should preferably exceed 80000 K/s.

Various additions and modifications to the described process and apparatus are possible. Instead of single valves 204, 205, 206, at least a portion of the reaction chamber may be equipped with a porous wall, through which the steam is fed into the chamber. A porous wall with steam entering continuously has the advantage that reactions involving the chamber walls will be minimized, and solid material is prevented from precipitating on the walls.

Instead of feeding only steam to the reaction chamber in various places along the reaction chamber, also metal vapor can be fed to the reaction chamber in more than one place for optimizing the nanoparticle/nanodroplet formation.

Instead of or in addition to feeding steam to the reaction chamber, liquid water may be fed to the chamber. Due to the elevated temperatures in the reaction chamber, the water will readily evaporate in the chamber to form steam. This may be particularly advantageous if a separate stream of liquid water is fed to the particle/droplet formation zone 212 or its vicinity, e.g., through valve 205. While evaporating, the water will remove heat from the formation zone 212. This will aid in the rapid cooling (quenching) of the metal vapor and thus improve the formation of nanoparticles or nanodroplets.

In addition to steam, some other gas - which is preferably substantially inert under the conditions present within the reaction chamber - can be fed to the reaction chamber, either through additional inlets or together with the steam and/or the metal vapor. Feeding such an additional gas into the reaction chamber can improve the mixing and/ or cooling process. Feeding of the metal vapor to the reaction chamber can be facilitated by employing the additional gas as a carrier gas for the metal vapor, i.e., by feeding such an additional gas to the reaction chamber together with the metal vapor. The additional gas can be, e.g., a noble gas, specifically argon.

It may be advantageous to feed a metal as precursor, preferably in vapor form, and a reactant gas to the reaction chamber. The reactant gas reacts with the precursor to form a metal-containing compound. Alternatively, it may be advantageous to feed a metal-containing compound as precursor, preferably in vapor form, and a reactant gas to the reaction chamber. The reactant gas reacts with the precursor to form a metal or a different metal-containing compound. The reaction conditions are chosen such that the metal or metal-containing compound is obtained in the form of nanoparticles and/or nanodroplets. The precursor may be fed to the reaction chamber by means of a carrier gas.

An apparatus for carrying out a process in which a precursor is fed to a reaction chamber is shown in Fig. 3 in a highly schematic manner. Many components of this reactor are similar to the corresponding components of the reactor of Fig. 2 and serve similar purposes. Again, the apparatus comprises an elongated reaction chamber 301. The precursor is provided in a precursor reservoir 303 and fed into the reaction chamber through a valve 307. Steam is provided in a steam reservoir 302 and fed into the reaction chamber through valves 305 and 306. These two valves are at different positions along the direction of elongation of the reaction chamber. A reactant gas is provided in a reactant gas reservoir 310 and fed into the reaction chamber through a valve 304. The reaction chamber may again be thought to be divided into three (imaginary) zones: a mixing zone 311, a particle/droplet formation zone 312, and a reaction zone 313.

The precursor and the reactant gas are fed into the mixing zone 311. There, intimate mixing between the precursor and the reactant gas occurs. The mixture of the precursor and the reactant gas is then transferred to the particle/droplet formation zone 312. In this zone, the mixture is subjected to rapid cooling (quenching) leading first to the formation of nanoparticles and/or nanodroplets of the precursor. Steam or liquid water may enter through valve 305 and may aid in the quenching process. The reactant gas then reacts with the precursor nanoparticles and/or nanodroplets to form nanoparticles and/or nanodroplets comprising the desired metal or metal compound. The exact conditions under which such nanoparticle and/or nanodroplet formation occurs will depend on the precursor, the reactant gas, on the reactor design, size etc.

The nanoparticles and/or nanodroplets generated in the particle/droplet formation zone 312 are then transferred to the reaction zone 313. Here, conditions are chosen such that a reaction of the nanoparticles/nanodroplets with the steam can occur. Additional steam can be fed to the reaction zone 313 through valve 306 for providing enough steam for a stoichiometric reaction and/or for regulating the temperature and pressure conditions in the reaction zone.

Finally, the reaction products as well as any unreacted reactants are removed to form a product stream 308. Again, at least a portion of the reaction chamber may be equipped with a porous wall, through which the steam is fed into the chamber.

Utilization of a precursor is especially advantageous in a process for producing ammonia according to the present invention. An example is the generation of aluminum nitride nanoparticles by feeding aluminum (as a precursor of aluminum nitride) and a nitriding gas (as a reactant gas) to the reaction chamber, under conditions as e.g. described in US 5,525,320 or as in the references cited therein. Advantageously, the precursor is provided in the form of a vapor, and the nitriding gas is nitrogen.

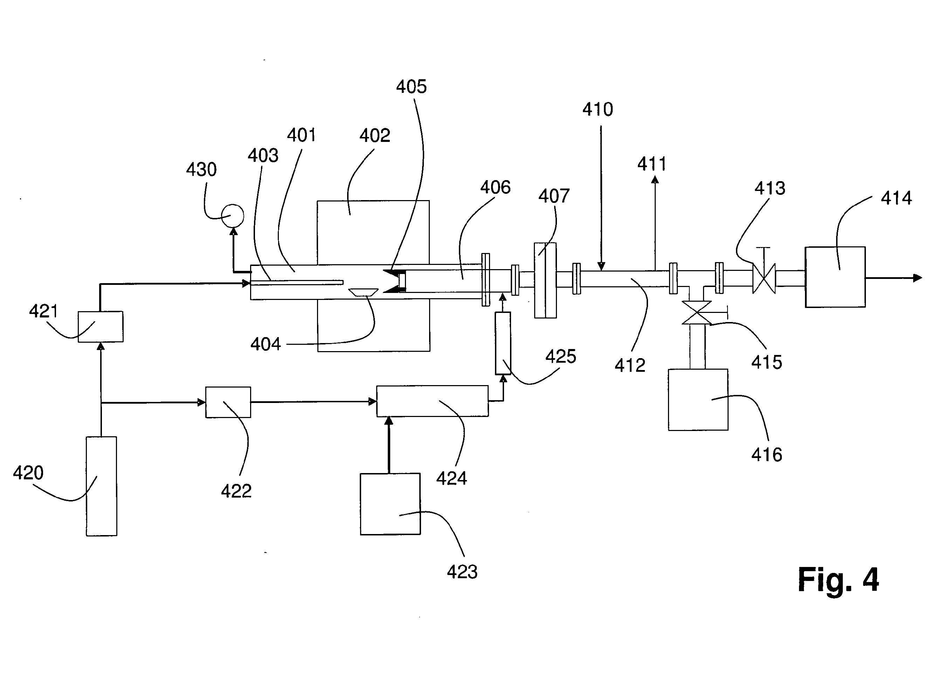

An apparatus which has been employed successfully in laboratory-scale experiments for producing hydrogen according to the principles of the present invention is shown in Fig. 4 in a highly schematic manner. The apparatus can be modified for producing ammonia. The apparatus comprises a tubular reactor 401 manufactured from Inconel® alloy (length 1000 mm, inner diameter 52.5 mm). The reactor may be heated by a furnace 402 (Carbolite® CFM 14/1). A stainless-steel cap 405 divides the reactor into an evaporation zone to the left of cap 405 and a reaction chamber 406 to the right of cap 405. The cap 405 has a conical inner surface with a central opening of approximately 2 mm, thereby forming a nozzle. A ceramic crucible 404 (Alsint® 99.7) with molten metal is placed in the evaporation zone of the reactor 401. An inlet tube 403 (inner diameter: 2.2 mm) is provided for feeding a carrier gas to the reactor, which is directed to flow along the surface of the metal in the crucible 404. Pressure in the evaporation zone is monitored by a pressure transducer 430.

Gases (steam and argon) are supplied to the reactor by the following means: An argon reservoir 420 is provided. Argon is fed to the inlet tube 403 to generate a carrier gas stream, via a first mass flow controller 421 (Bronkhorst® EL-Flow 201 A). Steam is generated in a steam generator 424 with the aid of a water pump 423 by known means. Argon gas is fed to the steam generator from the reservoir 420 through a second mass flow controller 422. An argon/steam mixture (hereinafter referred to as the mixing gas stream) is fed to the reactor 401 through a superheater 425.

Reaction products are treated and analyzed as follows. Particles produced in the reactor 401 are collected on a glass fiber filter 407 (Whatman® GF/A, diameter 150 mm). Gases exiting filter 407 are cooled in a condenser 412 by cooling water (cooling water inlet 410, cooling water outlet 411), the condenser additionally comprises a water trap (not shown in Fig. 4). Gases leaving the condenser 412 can be removed by a pump 414 (Vacuubrand® RZ 16), connected to the condenser 412 via pressure control valve 413. By means of a gate valve 415, gases may alternatively enter a gas chromatograph (GC) 416 (MTI Analytical Instruments P200 Gas Analyzer).

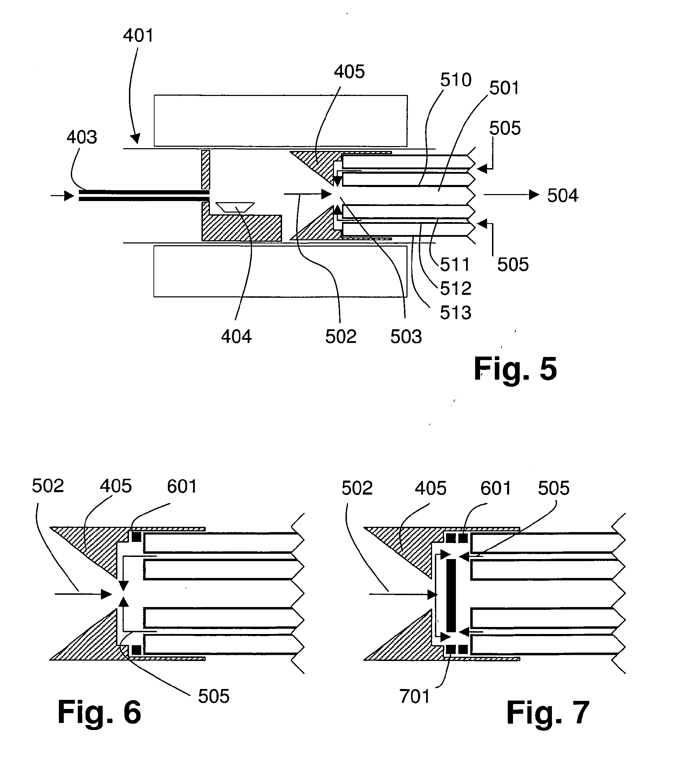

Figs. 5 to 7 show some details of the reactor 401. As best seen in Fig. 5, a lance comprising four concentric tubes 510, 511, 512, 513 is provided in the reaction chamber 406. Steam and argon enter the reaction chamber from the right end as a mixing gas stream 505, flowing in the space between tubes 511 and 512. The mixing gas stream 505 is discharged to a mixing zone 503 near the nozzle of the cap 405, at the left end of the reaction chamber 406. In the mixing zone, the mixing gas stream 505 hits the argon/metal vapor stream 502 exiting the nozzle of cap 405 to the right. Both streams are intimately mixed and then flow to the right in Fig. 4 and 5, into a particle/droplet formation and reaction zone 501 within the inner tube 510 (inner diameter: 16.5 mm). In this specific design, the nanoparticle/nanodroplet formation zone and the reaction zone overlap. Means for controlling the temperature within the reaction chamber 406, specifically within tube 510, may be provided (not shown in the Figures). These means will ensure that the inner wall of tube 510 is sufficiently thermostated to assure maximum metal to metal oxide conversion and therefore maximum hydrogen production. The inner wall of tube 510 is colder than the argon/metal vapor mixture in stream 502 at the position where the combined gas streams enter the mixing zone 503. Thereby, any heat of reaction may be removed. Reaction products and unreacted reactants leave the reaction chamber 406 to the right as stream 504.

Figs. 6 and 7 illustrate two different geometries for the mixing zone. In Fig. 6, the streams 502 and 505 hit each other in a "T-mode" at approximately right angles: Stream 505 is directed radially inward, while stream 502 enters the reaction chamber centrally in axial direction. The length of the mixing zone can be varied by inserting or removing distance rings 601 with a thickness of 6 mm each. In Fig. 7, the streams hit each other head-to-head in a ring-shaped off-axis region due to the presence of a bluff body 701. The configuration of Fig. 6 yielded better results than the configuration of Fig. 7, and therefore the configuration of Fig. 6 is preferred.

Experiments were carried out utilizing the apparatus of Fig. 4. Prior to every experiment, the reactor was evacuated to 25 mbar and subsequently purged with argon in order to remove as much oxygen from the system as possible. The gate valve 415 remained closed throughout the evacuation and purging process in order to protect the GC. This procedure was repeated several times until the amount of oxygen detected by the GC remained at a constant value of 0.3 - 0.4 %. It was not possible to ensure a completely oxygen-free system, as the reactor was not fully gastight. To hinder a further increase in $O_2$ concentration by diffusion of the ambient $O_2$ into the system, the reactor was kept at 1100 mbar during warm up.

As soon as steady state at the desired temperature was reached, the carrier gas was turned on followed by the water for steam generation and the mixing gas. The carrier gas was switched on first to prevent a steam backflow into the evaporation zone, which would have led to a fast oxidation of the metal melt surface. Samples were taken by the GC every 30 seconds for the duration of an experiment. The sampling phase was 10 seconds, the analyzing phase lasted 20 seconds. The concentration of $H_2$ was displayed in % and logged in a file. The accuracy of the GC used to determine the $H_2$ concentration of the product gas was approved by analyzing a gas mixture (Scott Specialty Gases) containing 1% of each $O_2$, $H_2$, CO, $CO_2$, and $CH_4$ with the balance of $N_2$ previous to the first run.

In one experiment, zinc (Zn) was placed into the crucible 404. Argon was fed to the inlet tube 403 at a carrier gas flow rate of 0.5 liters per minute (l/min) and passed over the crucible with the molten zinc. The temperature in the inside of the furnace 402 was set to 1023 K. Steam was generated at a rate of 10.2 grams per hour (g/h) and was mixed with argon at a rate of 1.5 l/min and fed to the reaction chamber as mixing gas stream 505. The pressure in the reactor 401 was only slightly above atmospheric pressure (1050 mbar absolute pressure). The particles collected on the filter were analyzed by X-ray diffraction (XRD). XRD patterns were analyzed using the software Topas® (Version 2.0) to obtain the exact particle composition (the Zn to ZnO ratio). The same software was also used to determine the crystal size of Zn and ZnO. A hydrogen yield (moles of hydrogen produced per moles of zinc evaporated) of up to 68% was achieved with these or similar parameters. With these or similar conditions, the size of the collected Zn and ZnO crystals, as determined by X-ray diffraction, varied between approximately 10 nanometers (nm) and 130 nm.

The apparatus shown in Fig. 4 can be modified for producing ammonia by providing an additional inlet for a nitriding gas (e.g., nitrogen). This inlet may replace the steam inlet such that stream 505 would be a stream of nitriding gas. A precursor (e.g., aluminium) would then be vaporized in the evaporation zone and mixed with the nitriding gas in the mixing zone 503. Steam is introduced to the formation/reaction zone 501 by means not shown in Fig. 5 (e.g., mixed with the nitriding gas or fed through the annular region between tubes 510 and 511, with a plurality of radial openings in tube 510 to allow the steam to be transferred to the reaction zone 501).

For designing a continuous reactor for carrying out the process of the present invention commercially, the following design guidelines should be contemplated:

- Clear separation of evaporation and reaction zone;
- Continuous supply of metal vapor;
- Continuous supply of water vapor;
- Additional continuous supply of nitriding gas in the case of ammonia production;
- Continuous removal of metal oxide particles and unreacted metal or metal-containing particles.
- Continuous removal of hydrogen and unreacted water vapor in the case of hydrogen production;
- Continuous removal of ammonia, unreacted water vapor and unreacted nitriding gas in the case of ammonia production.

A clear separation of the evaporation zone and the reaction chamber avoids steam backflow, which is the main reason for a fast oxidation of the metal melt surface. The separation should be done in a manner allowing for independent temperatures of the evaporation zone and of the reaction zone. Of course, condensation of metal inside the interconnection of the two zones should be avoided. With a controllable and continuous supply of metal, it is possible to control the evaporation rate of metal such that it does not decrease over time. If oxidation of the metal melt surface which is responsible for reduction of the evaporation rate cannot be avoided, despite the separation of evaporation and reaction zone, the forming oxide layer on the melt surface should be removed. This could be done mechanically, for instance by using a stirrer. Continuous supply of steam can be achieved by a steam generator as is well known in the art.

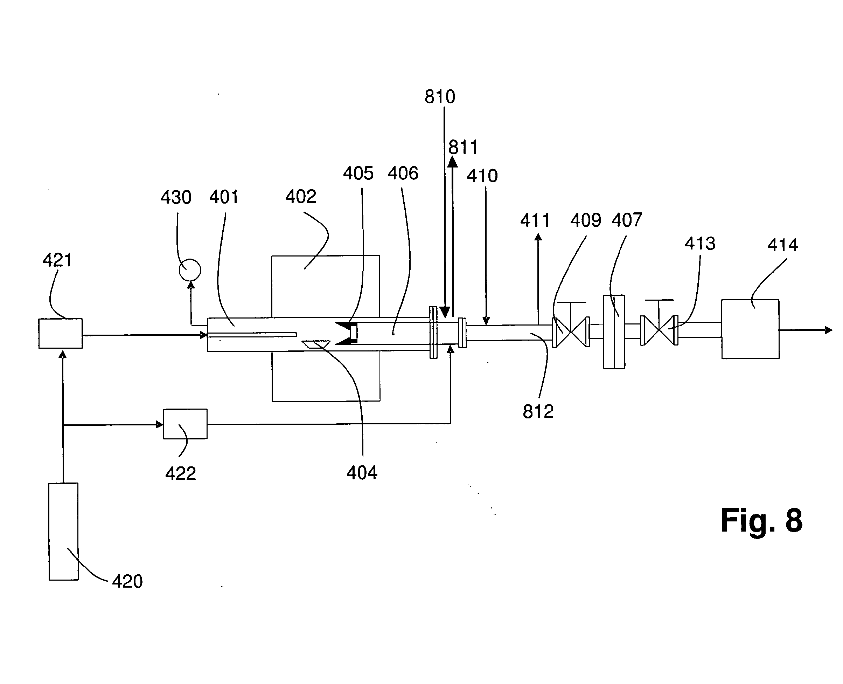

In the embodiment of Fig. 4, nanoparticles are generated *in situ,* i.e. in the chamber 406 in which also the reaction of the nanoparticles and the steam takes place. However, nanoparticles of a metal or metal-containing compound may also be produced in a process separate from the reaction with the steam. An apparatus which has been employed successfully for producing nanoparticles is shown in Fig. 8 in a highly schematic manner. This apparatus is a slight modification of the apparatus of Fig. 4, and many parts of this apparatus are identical to the corresponding parts of the apparatus in Fig. 4 and serve similar purposes. These parts carry the same reference numbers as in Fig. 4 and will not be explained again for the sake of brevity. The main differences are the following: Cooling water 810, 811 is provided to the reactor between tubes 510 and 511 and between tubes 512 and 513. The condenser is replaced by a heat exchanger 812. Pure argon gas is provided as the mixing gas stream 505 instead of an argon/steam mixture. Thus, a steam generator is unnecessary and is left away.

With this setup, Zn nanoparticles were produced. The flow rate of the argon carrier gas fed to tube 403 varied between 0.5 and 3 l/min. The flow rate of the argon mixing gas stream 505 varied between 10 and 30 l/min. The furnace temperature varied between 923 and 1023 K. Other parameters (number of crucibles 404, mixing mode, mixing zone length, diameter of the hole in cap 405) were also varied. BET surface areas between 1.9 $m^2$/g and 11.2 $m^2$/g, corresponding to BET-equivalent particle diameters between 425 nm and 72 nm, were obtained. In the investigated range, the conditions leading to the largest BET surface area of 11.2 $m^2$/g (i.e., to the smallest particle size) were a furnace temperature of 1023 K, a carrier gas flow rate of 1.5 l/min, a mixing gas flow rate of 30 l/min, one single crucible, T-mode mixing with one distance ring 601 of 6 mm thickness to define the mixing zone, and 6 mm hole diameter in cap 405. The Zn nanoparticles thus obtained may be collected and used in a fluidized-bed reactor to produce hydrogen in a process according to the present invention or could be directly fed to the mixing zone 503 of a modified reactor similar to the reactor 401 without melt evaporation 404.

It should be emphasized that, while the invention has been described in conjunctions with specific embodiments, many alternatives, modifications and variations are possible, and the invention is not limited to the embodiments described above.

## Claims

1. Process for producing hydrogen, comprising:

   - providing steam (202) in a reaction zone (213);
   - providing nanoparticles and/or nanodroplets with a BET surface area of at least 1.0 $m^2/g$ comprising a metal or a metal-containing compound in said reaction zone (213);
   - reacting said steam (202) with said metal or metal-containing compound in said reaction zone (213) under conditions adapted for obtaining gaseous hydrogen.

2. Process according to claim 1, **characterized in that** said metal or metal-containing compound is selected from the group consisting of Zn, Fe, Mg, Al, Ti, Si, Ca, and FeO.

3. Process according to claim 2, **characterized in that** said metal or metal-containing compound is Zn (zinc).

4. Process according to any of the preceding claims, **characterized in that** said nanoparticles and/or nanodroplets are provided in an aerosol state.

5. Process according to one of the preceding claims, **characterized in that** said nanoparticles and/or nanodroplets and said steam are continuously fed into said reaction zone (213), and that any products of the reaction and any unreacted reactants are continuously removed from said reaction zone.

6. Process according to one of the preceding claims, **characterized in that** said nanoparticles and/or nanodroplets are generated in a formation zone (212) upstream from or overlapping with said reaction zone (213) by:

   - feeding a stream of a vapor (203) of said metal or metal-containing compound into said formation zone (212); and
   - cooling said vapor (203) of said metal or metal-containing compound in said formation zone (212) under conditions adapted for obtaining said nanoparticles and/or nanodroplets.

7. Process according to claim 6, **characterized in that** said stream of said vapor (203) of said metal or metal-containing compound, before feeding said vapor into said formation zone (212), is at a temperature and pressure such that said temperature is above the saturation temperature of said vapor, and that, in said formation zone (212), said vapor is cooled to a temperature below said saturation temperature with a cooling rate exceeding 5000 K/s.

8. Process according to one of the claims 1 to 5, **characterized in that** said nanoparticles and/or nanodroplets are generated in a formation zone (212) upstream from or overlapping with said reaction zone (213) by:

   - feeding a stream of a precursor into said formation zone (212);
   - feeding a stream of a reactant gas into said formation zone (212);
   - reacting said precursor and said reactant gas in said formation zone (212) under conditions adapted for obtaining said nanoparticles and/or nanodroplets comprising said metal or metal-containing compound.

9. Process for producing ammonia, comprising:

   - providing steam in a reaction zone;
   - providing nanoparticles and/or nanodroplets with a BET surface area of at least 1.0 $m^2/g$ comprising a metal nitride in said reaction zone;
   - reacting said steam with said metal nitride in said reaction zone under conditions adapted for obtaining gaseous ammonia.

10. Process according to claim 9, **characterized in that** said metal nitride is AIN (aluminum nitride).

11. Process according to claim 9 or 10, **characterized in that** said nanoparticles and/or nanodroplets are generated in a formation zone upstream from or overlapping with said reaction zone by:

   - feeding a stream of a precursor into said formation zone;
   - feeding a stream of a nitriding gas into said formation zone;
   - reacting said precursor and said nitriding gas in said formation zone under conditions adapted for obtaining nanoparticles and/or nanodroplets comprising said metal nitride.

12. Apparatus for carrying out a process according to claim 1 or 6, comprising a reaction chamber (201) with at least one first inlet for nanoparticles and/or nanodroplets comprising a metal or a metal-containing substance or for a metal vapor (203), at least one second inlet for steam or liquid water (202), and at least one outlet for products of the reaction (208), further comprising a mixing zone (211) adapted for mixing streams entering through said first and second inlets, and a reaction zone (213) downstream from said mixing zone and/or overlapping with said mixing zone (211) adapted for reacting nanoparticles and/or nanodroplets comprising a metal or a metal-containing substance with steam.

13. Apparatus according to claim 12, **characterized in that** said first inlet is adapted for a metal vapor and that said reaction chamber (201) further comprises a particle/droplet formation zone (212) downstream from said mixing zone (211) and/or overlapping with said mixing zone (211) and upstream from said reaction zone (213) and/or overlapping with said reaction zone (213), adapted for forming nanoparticles and/or nanodroplets from said metal vapor by rapid cooling.

14. Apparatus according to claim 13, **characterized in that** said reaction chamber (201) is elongated and has a plurality of inlets for said steam or liquid water (202) and/or a plurality of inlets for said vapor (203) of said metal or metal-containing substance distributed along a direction of elongation of said reaction chamber (201).

15. Apparatus according to claim 13, **characterized in that** at least a portion of said reaction chamber (201) has porous walls and that means for feeding at least a portion of said steam or liquid water and/or at least a portion of said vapor of said metal or metal-containing substance to said reaction chamber through said porous walls are provided.

16. Apparatus for carrying out a process according to claim 8 or 11, comprising a reaction chamber (301) with at least one first inlet for a precursor (310), at least one second inlet for a reactant gas (303) or a nitriding gas, at least one third inlet for steam or liquid water (302), and at least one outlet for products of the reaction (308), further comprising a mixing zone (311) adapted for mixing streams entering through at least said first inlet and said second inlet, a particle/droplet formation zone (312) downstream from said mixing zone and/or overlapping with said mixing zone, adapted for forming nanoparticles and/or nanodroplets from said precursor and said reactant gas or said nitriding gas, and a reaction zone (313) downstream from said mixing zone and/or overlapping with said mixing zone adapted for reacting nanoparticles and/or nanodroplets with steam.

17. Apparatus according to claim 16, **characterized in that** at least a portion of said reaction chamber (301) has porous walls and that means for feeding at least a portion of said steam or liquid water to said reaction chamber through said porous walls are provided.

101

102

$$ZnO \rightarrow Zn + \frac{1}{2} O_2$$

$O_2$

Zn

$H_2O$

$$Zn + H_2O \rightarrow ZnO + H_2$$

$H_2$

ZnO

103

**Fig. 1**

Fig. 2

Fig. 3

Fig. 4

Fig. 5

Fig. 6

Fig. 7

**Fig. 8**

**European Patent Office**

# EUROPEAN SEARCH REPORT

Application Number

EP 04 01 3334

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 6 572 836 B1 (BOILY SABIN ET AL) 3 June 2003 (2003-06-03) * claims 1-7 * * column 1, lines 21-27 * * column 2, line 60 - column 5, line 20 * * figure 3 * | 1-8, 12-17 | C01B3/10 C01B3/06 C01C1/02 C01B21/072 C01B21/06 B01J8/08 |
| D,A | WO 02/090255 A (AUNER NORBERT ; WACKER CHEMIE GMBH (DE); DOW CORNING (US)) 14 November 2002 (2002-11-14) * claims 1-4 * * page 1, line 20 - page 3, line 18 * | 9-11 | |
| D,A | US 5 525 320 A (PRATSINIS SOTIRIS E ET AL) 11 June 1996 (1996-06-11) * claims * * column 4, line 9 - column 5, line 53 * * figures 1,8; table 2 * | 9-17 | |
| D,A | STEINFELD A: "Solar hydrogen production via a two-step water-splitting thermochemical cycle based on Zn/ZnO redox reactions" INTERNATIONAL JOURNAL OF HYDROGEN ENERGY, ELSEVIER SCIENCE PUBLISHERS B.V., BARKING, GB, vol. 27, no. 6, June 2002 (2002-06), pages 611-619, XP004345166 ISSN: 0360-3199 1. Introduction | 1-8 | TECHNICAL FIELDS SEARCHED (Int.Cl.7) C01B C01C B01J |
| A | EP 0 847 372 B (ICI PLC) 27 June 2001 (2001-06-27) * claim 8 * * paragraphs [0009], [0020], [0021] * * figure 1 * | 12-17 | |

The present search report has been drawn up for all claims

| Place of search | Date of completion of the search | Examiner |
|---|---|---|
| Munich | 28 October 2004 | Rhodes, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 04 01 3334

This annex lists the patent family members relating to the patent documents cited in the above-mentioned European search report.
The members are as contained in the European Patent Office EDP file on
The European Patent Office is in no way liable for these particulars which are merely given for the purpose of information.

28-10-2004

| Patent document cited in search report | | Publication date | Patent family member(s) | | Publication date |
|---|---|---|---|---|---|
| US 6572836 | B1 | 03-06-2003 | CA | 2301252 A1 | 17-09-2001 |
| | | | AU | 3527401 A | 24-09-2001 |
| | | | WO | 0168517 A1 | 20-09-2001 |
| | | | CN | 1423619 T | 11-06-2003 |
| | | | EP | 1263677 A1 | 11-12-2002 |
| | | | JP | 2003527281 T | 16-09-2003 |
| WO 02090255 | A | 14-11-2002 | DE | 10121475 A1 | 07-11-2002 |
| | | | WO | 02090255 A1 | 14-11-2002 |
| | | | EP | 1385782 A1 | 04-02-2004 |
| US 5525320 | A | 11-06-1996 | WO | 9601786 A1 | 25-01-1996 |
| EP 0847372 | B | 17-06-1998 | EP | 0847372 A1 | 17-06-1998 |
| | | | AT | 202541 T | 15-07-2001 |
| | | | AU | 702825 B2 | 04-03-1999 |
| | | | AU | 6879996 A | 27-03-1997 |
| | | | BR | 9610149 A | 02-02-1999 |
| | | | CA | 2230017 A1 | 13-03-1997 |
| | | | CN | 1200102 A ,B | 25-11-1998 |
| | | | DE | 69613581 D1 | 02-08-2001 |
| | | | DE | 69613581 T2 | 25-04-2002 |
| | | | ES | 2158339 T3 | 01-09-2001 |
| | | | WO | 9709273 A1 | 13-03-1997 |
| | | | JP | 11512070 T | 19-10-1999 |
| | | | TW | 389741 B | 11-05-2000 |
| | | | US | 2002039553 A1 | 04-04-2002 |
| | | | US | 2002182137 A1 | 05-12-2002 |

EPO FORM P0459

For more details about this annex : see Official Journal of the European Patent Office, No. 12/82